Europäisches Patentamt

European Patent Office

Office européen des brevets

(19)

(11) Numéro de publication : **0 245 140**
**B1**

(12)

# FASCICULE DE BREVET EUROPÉEN

(45) Date de publication du fascicule du brevet :
23.11.89

(51) Int. Cl.⁴ : **B 01 D 21/00**

(21) Numéro de dépôt : **87400883.2**

(22) Date de dépôt : **16.04.87**

(54) **Décanteur lamellaire.**

(30) Priorité : **07.05.86 FR 8606638**

(43) Date de publication de la demande :
**11.11.87 Bulletin 87/46**

(45) Mention de la délivrance du brevet :
**23.11.89 Bulletin 89/47**

(84) Etats contractants désignés :
**BE CH DE ES GB IT LI LU NL**

(56) Documents cités :
**FR–A– 2 084 604**
**FR–A– 2 097 898**
**FR–A– 2 252 863**
**FR–A– 2 267 140**

(73) Titulaire : **"DEGREMONT" Société dite:**
**183, Avenue du 18 Juin 1940**
**F-92508 Rueil-Malmaison Cédex (FR)**

(72) Inventeur : **Vion, Patrick**
**17, rue de l'Argonne**
**F-78800 Houilles (FR)**

(74) Mandataire : **Armengaud Ainé, Alain**
**Cabinet ARMENGAUD AINE 3 Avenue Bugeaud**
**F-75116 Paris (FR)**

Jouve, 18, rue St-Denis, 75001 Paris, France

**Description**

La présente invention concerne un décanteur lamellaire, dont le ou les modules lamellaires sont constitués par des tubes, du type à flux hydraulique ascendant, c'est-à-dire dans lequel le liquide circule du bas vers le haut de l'appareil, et destiné à l'épuration de liquides, notamment d'eaux potables, industrielles et résiduaires urbaines.

On sait que l'efficacité des décanteurs lamellaires est essentiellement liée à la qualité de la répartition du liquide à traiter sur toute la surface de décantation lamellaire.

Suivant la conception des modules ou conduits lamellaires, on peut distinguer deux types de répartition correcte. Dans le cas des modules lamellaires constitués par des plaques parallèles, la répartition est assurée en aval du module, c'est-à-dire à la sortie du liquide traité, par des déversoirs prévus au débouché des plaques et propres à chaque conduit défini par deux plaques.

Dans le cas des modules lamellaires constitués par des tubes, une telle reprise n'est pas envisageable, et la seule répartition par une série de goulottes ou de collecteurs perforés au-dessus des modules est illusoire ; aussi, le liquide est souvent réparti par l'amont, c'est-à-dire lors de l'introduction du liquide à traiter dans l'appareil, tout au long du décanteur, par un canal perforé assurant l'équirépartition du liquide.

Cette distribution pénalise les décanteurs lamellaires à modules tubulaires par ailleurs beaucoup plus performants que les décanteurs à plaques parallèles, car il y a risque de dépôts et de détérioration des particules floculées, ou flocs, au niveau des orifices de distribution. Pour éviter la destruction des flocs, il faudrait envisager des canaux de distribution très importants, avec des risques de dépôts supplémentaires et au prix d'un agrandissement non négligeable des ouvrages.

La présente invention permet de pallier cet inconvénient rencontré dans la répartition du liquide dans les décanteurs lamellaires tubulaires en effectuant une répartition efficace à l'aval de ces décanteurs et permet également d'éviter, en amont, c'est-à-dire à l'introduction du liquide dans les modules lamellaires, la formation de flux horizontaux importants à proximité de ces modules, flux qui nuisent à la décantation du floc.

L'appareil de décantation lamellaire à flux ascendant suivant l'invention, dont le ou les modules lamellaires sont constitués par des tubes, est caractérisé en ce qu'il est doté d'un système de répartition surmontant les modules lamellaires équipant l'appareil et constitué par un cloisonnement déterminant une pluralité de zones de surface égale, hydrauliquement indépendantes et munies de moyens de reprise du liquide traité, agencés de façon à ce que le débit de chaque zone en liquide traité soit identique.

Les moyens de reprise du liquide traité peuvent consister, comme il est connu de FR-A-2.252.863 en des goulottes à créneaux. Conformément à l'invention, ces goulottes sont disposées transversalement à l'axe longitudinal de l'appareil.

Ces moyens peuvent également consister en des tubes à orifices calibrés.

En toute hypothèse, les créneaux des goulottes ou les orifices des tubes sont uniformément répartis et présentent les mêmes caractéristiques dans chaque zone.

Conformément à l'invention, la zone lamellaire du décanteur est divisée en secteurs égaux par des plaques de distribution et de répartition placées sous le lamellaire, chaque secteur comportant un nombre déterminé, égal, de zones de reprise de liquide traité.

Les divers caractéristiques et avantages de l'invention ressortiront de la description qui va suivre de deux de ses formes possibles de réalisation, données uniquement à titre d'exemples non limitatifs.

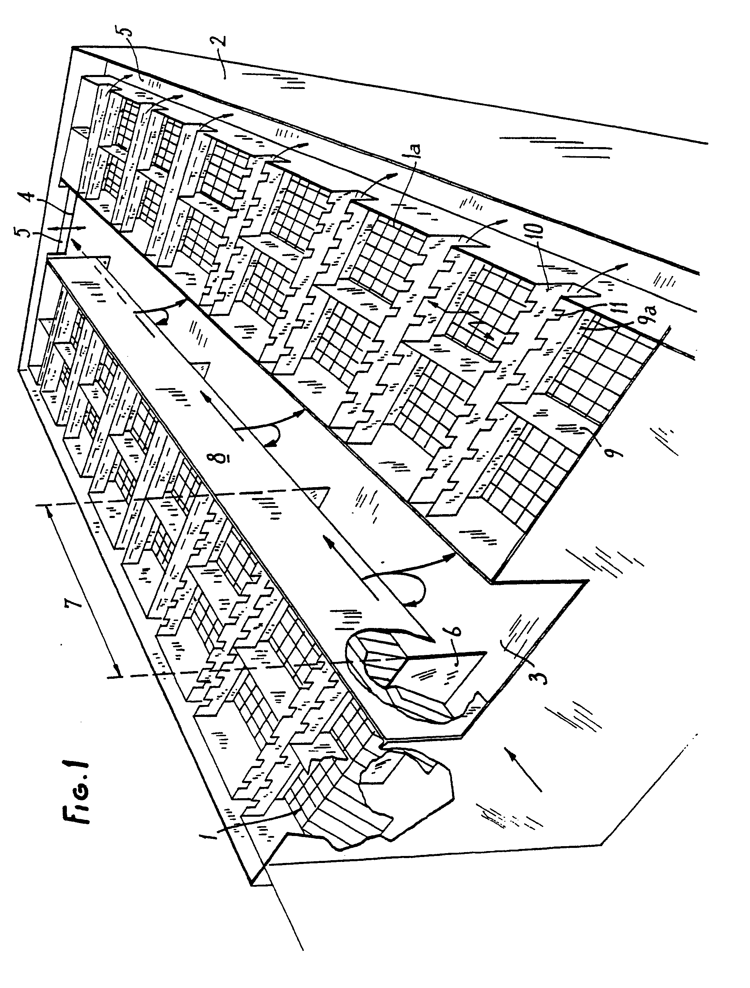

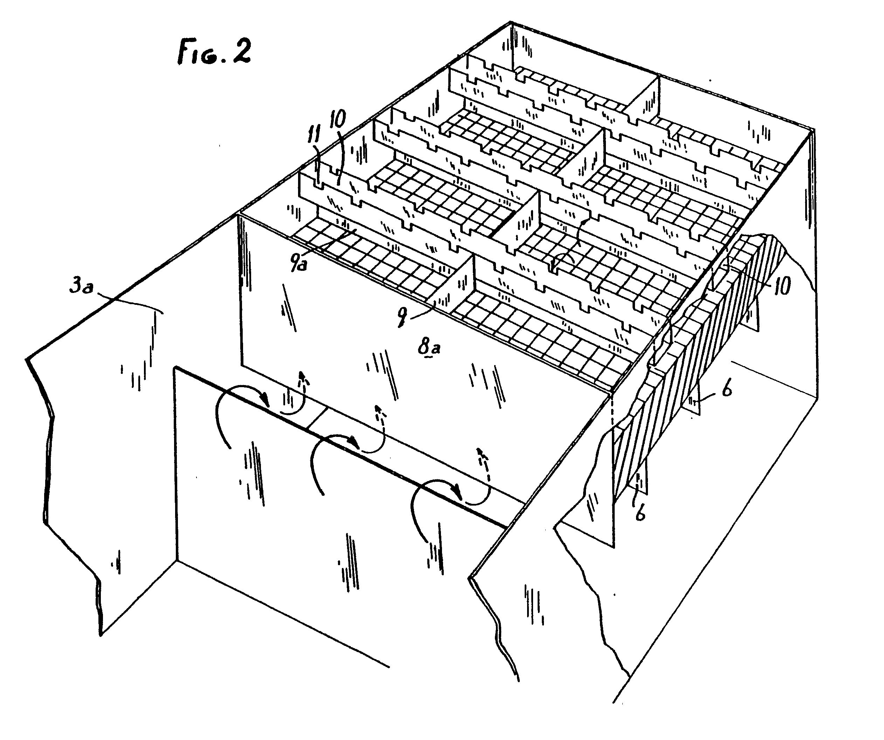

Cette description est faite en référence aux dessins annexés, dont les Figures 1 et 2 sont des vues en perspective, avec arrachements, de décanteurs suivant l'invention.

L'appareil comporte, dans la forme de réalisation représentée à la Figure 1, deux ensembles de modules lamellaires 1, 1a, disposés dans une enceinte 2 de part et d'autre d'un canal 3 d'amenée du liquide à traiter, canal qui, suivant l'invention, est alimenté dans la partie haute de l'appareil et se termine par un déversoir 4 de hauteur réglable, surmontant la goulotte 5 de collecte du liquide traité.

Ces dispositions adoptées suivant l'invention permettent au flux hydraulique constitué par le liquide, tel qu'eau floculée ou suspension, introduit sous une certaine vitesse, donc avec une certaine énergie cinétique, d'être maintenu assez proche de la surface de l'appareil, le déversoir réglable 4 prévu à l'extrémité du canal 3 opposée à l'entrée du liquide, outre l'appel de débit qu'il provoque pour l'écoulement du flux de liquide, permettant de récupérer du liquide clarifié en bout de canal et d'évacuer les particules flottant en surface, qui risqueraient de s'accumuler dans la partie terminale du canal. Le débit de ce déversoir est un compromis entre un débit assez élevé pour maintenir le flux de distribution de liquide à un niveau suffisant dans l'appareil, et un débit assez faible pour que la surverse soit de qualité proche de celle du liquide traité.

Le liquide circule dans le canal 3 et est distribué dans les différents secteurs lamellaires 7, définis par les plaques de répartition 6 des modules lamellaires, au fur et à mesure de sa progression, en passant sous la cloison longitudinale de distribution 8, dont le niveau bas est supérieur au niveau bas des plaques 6.

La répartition du liquide dans les modules lamellaires se fait, conformément à l'invention, grâce à un compartimentage réalisé, au-dessus des modules, au moyen d'un cloisonnement à la fois longitudinal 9 et transversal 9a, s'appuyant sur la surface des modules et sur les goulottes 10 de reprise d'eau décantée. Ces goulottes présentent chacune, suivant l'invention, exactement le même nombre d'orifices, tels que créneaux 11, tous de même dimension, par lesquels le liquide, après son passage dans les modules où il est décanté, se déverse dans les goulottes, ces dernières débouchant elles-mêmes dans le canal 5 d'eau décantée.

Ce compartimentage suivant l'invention détermine autant de zones de reprise pour le liquide traité, zones bornées par les cloisonnements 9, 9a.

Toutes ces zones sont identiques en surface et en nombre d'orifices 11 que présentent les goulottes existant dans ces zones. Le débit Q est donc réparti uniformément entre toutes les zones de reprise en débit unitaire :

$$q_z = \frac{Q}{\text{nombre de zones}}$$

Les plaques de répartition 6 prévues sous les modules divisent l'ensemble lamellaire en N décanteurs élémentaires ou secteurs, comprenant chacun n zones de reprise. Les débits des différents secteurs sont identiques et égaux à $q_s$ :

$$q_s = \frac{Q}{N} = q_z \cdot n .$$

Les plaques de répartition 6 étant plus basses que la cloison 8, l'appel de débit $q_s$ d'un décanteur élémentaire se porte vers la partie basse du canal de distribution plutôt que vers les côtés, car le passage sous les plaques constituerait un parcours plus long, engendrant une perte de charge plus élevée.

Dans la forme de réalisation représentée à la Figure 2, l'appareil est alimenté par un canal frontal 3a, avec interposition d'une cloison 8a, dont le rôle est analogue à celui de la cloison 8 de l'appareil représenté à la Figure 1, mais qui, dans ce cas, est transversale au lieu d'être longitudinale. Pour le reste, les dispositions adoptées dans cette forme de réalisation sont identiques à celles qui viennent d'être décrites en relation avec la Figure 1. Cependant, dans le cas de la Figure 2, les cloisons 8 descendent à un niveau inférieur à celui des plaques de répartition 6 pour porter le flux hydraulique d'alimentation à un niveau inférieur à celui des plaques 6, afin d'éviter tout balayage horizontal sous les modules.

Les dispositions suivant l'invention permettent d'obtenir une répartition du liquide traité avec une qualité au moins égale à celle des dispositifs utilisant des canaux de distribution, sans en présenter les inconvénients signalés plus haut, pour des zones lamellaires de reprise de 1 à 10 m² et un nombre de secteurs ou décanteurs élémentaires compris entre 2 et 12, suivant la taille de l'appareil.

L'appareil suivant l'invention est utilisable pour une plage de débits très large, pouvant aller de 20 à 5 000 m³/h.

L'appareil suivant l'invention, par la qualité de la répartition qu'il procure, permet d'éviter toute détérioration du floc grâce à l'absence de couloir avec orifices de distribution, de réduire les balayages hydrauliques sous les modules, d'utiliser le canal de distribution comme une sorte de débourbeur ou de pré-décanteur soulageant la zone lamellaire, de faire passer les bras du râcleur de fond, s'il existe, dans le canal d'amenée du liquide ou d'y placer les canaux de reprise d'eau traitée, réduisant ainsi l'importance des travaux de génie civil.

Les moyens de reprise du liquide traité peuvent consister en des tuyaux ou des goulottes percés d'orifices calibrés, au lieu d'être constitués par des goulottes à créneaux que l'on a décrites, et qui sont représentées sur les dessins annexés.

**Revendications**

1. Appareil de décantation lamellaire à flux ascendant dont le ou les modules lamellaires sont constitués par des tubes, caractérisé en ce qu'il est doté d'un système de répartition surmontant les modules lamellaires (1, 1a), constitué par un cloisonnement (9, 9a) déterminant la création d'une pluralité de zones de surface égale, hydrauliquement indépendantes, munies de moyens (10, 11) de reprise du liquide traité agencés de façon à ce que le débit de chaque zone en liquide traité soit identique.

2. Appareil de décantation lamellaire suivant la revendication 1, caractérisé par des moyens de reprise du liquide traité, consistant en des goulottes (10) à créneaux (11), ces goulottes étant disposées transversalement à l'axe longitudinal médian de l'appareil, les créneaux de ces goulottes étant uniformément répartis et présentant les mêmes caractéristiques dans chaque zone.

3. Appareil de décantation lamellaire suivant la revendication 1, caractérisé en ce que les moyens de reprise du liquide traité consistent en des tubes à orifices calibrés, les orifices de ces tubes étant uniformément répartis et présentant les mêmes caractéristiques dans chaque zone.

4. Appareil de décantation lamellaire suivant l'une quelconque des revendications précédentes, caractérisé en ce que l'ensemble des modules lamellaires est divisé en secteurs égaux, fonctionnant comme décanteurs élémentaires, (7) par des plaques de distribution (6) placées sous le lamellaire, chaque secteur ou décanteur élémentaire (7) comportant un nombre déterminé, égal, de zones de reprise de liquide traité.

5. Appareil de décantation lamellaire suivant l'une quelconque des revendications précédentes, caractérisé en ce que les modules lamellaires sont disposés d'un côté ou de part et d'autre d'un canal (3) d'amenée du liquide à traiter alimenté à sa partie supérieure, et séparés de ce canal par une cloison longitudinale (8).

6. Appareil de décantation lamellaire suivant la revendication 5, caractérisé en ce que le canal (3) comporte à l'extrémité opposée à l'arrivée d'eau, un déversoir (4) réglable.

7. Appareil de décantation lamellaire suivant la revendication 5, caractérisé en ce que les plaques séparatrices (6) font saillie, vers la partie inférieure de l'appareil, d'une quantité plus grande que celle dont fait saillie chaque cloison (8), mais sans atteindre nécessairement le fond de l'appareil.

8. Appareil suivant l'une quelconque des revendications 1 à 4, caractérisé en ce que les modules lamellaires sont alimentés par un canal frontal (3a), avec interposition transversale entre le canal et les modules d'une cloison transversale (8a) descendant à un niveau inférieur à celui des plaques (6).

## Claims

1. Laminar clarification apparatus with an ascending flow, the laminar module(s) of which is/are formed by tubes, characterised in that it is provided with a distribution system surmounting the laminar modules (1, 1a) and formed by partitioning (9, 9a) which creates a plurality of zones which are equal in area, hydraulically independent and provided with means (10, 11) for collecting the treated liquid which are formed such that the treated liquid flow is the same in each zone.

2. Laminar clarification apparatus according to claim 1, characterised by means for collecting the treated liquid, consisting of chutes (10) with gaps (11), these chutes being disposed at a right angle to the central longitudinal axis of the apparatus, the gaps in these chutes being uniformly distributed and having the same characteristics in each zone.

3. Laminar clarification apparatus according to claim 1, characterised in that the means for collecting the treated liquid consist of tubes with calibrated openings, the openings in these tubes being uniformly distributed and having the same characteristics in each zone.

4. Laminar clarification apparatus according to any of the preceding claims, characterised in that the laminar module unit is divided into equal sectors, which act as elementary clarifiers (7), by separating plates (6) placed under the laminate, each sector or elementary clarifier (7) comprising a determined and equal number of zones for collecting the treated liquid.

5. Laminar clarification apparatus according to any of the preceding claims, characterised in that the laminar modules are disposed on one or on both sides of a channel (3) for conveying the liquid to be treated, which channel is supplied at its upper part, and are separated from this channel by a longitudinal partition (8).

6. Laminar clarification apparatus according to claim 5, characterised in that the channel (3) comprises an adjustable overflow (4) at the end opposite the water inlet.

7. Laminar clarification apparatus according to claim 5, characterised in that the separating plates (6) project, at the lower part of the apparatus, further than each partition (8), but without necessarily reaching the bottom of the apparatus.

8. Apparatus according to any of claims 1 to 4, characterised in that the laminar modules are supplied by a front channel (3a), with a transverse partition (8a), which extends downwards to a level lower than that of the plates (6), being placed in a transverse manner between the channel and the modules.

## Patentansprüche

1. Mit Lamellen ausgestattete Dekantiervorrichtung für aufsteigenden Fluß, deren Lamellenmodul oder Lamellenmodule aus Rohren bestehen, dadurch gekennzeichnet, daß sie mit einem Verteilungssystem ausgestattet ist, das die Lamellenmodule (1, 1a) überragt und das aus einer Unterteilung (9, 9a) besteht, durch die mehrere hydraulisch unabhängige Zonen mit gleicher Oberfläche geschaffen werden, welche mit Mitteln (10, 11) zum Abführen der behandelten Flüssigkeit ausgestattet und derart angeordnet sind, daß der Abfluß an behandelter Flüssigkeit aus jeder Zone identisch ist.

2. Mit Lamellen ausgestattete Dekantiervorrichtung nach Anspruch 1, gekennzeichnet durch Mittel zum Abführen der behandelten Flüssigkeit, die aus mit Zinnen (11) versehenen Wasserablaufrinnen (10) bestehen, wobei diese Wasserablaufrinnen quer zur Mittellängsachse der Vorrichtung angeordnet sind und die Zinnen dieser Wasserablaufrinnen gleichmäßig verteilt sind und in jeder Zone die gleichen Merkmale besitzen.

3. Mit Lamellen ausgestattete Dekantiervorrichtung nach Anspruch 1, dadurch gekennzeichnet, daß die Mittel zum Abführen der behandelten Flüssigkeit aus Rohren mit kalibrierten Öffnungen bestehen, wobei die Öffnungen dieser Rohre gleichmäßig verteilt sind und in jeder Zone die gleichen Merkmale besitzen.

4. Mit Lamellen ausgestattete Dekantiervorrichtung nach einem der vorhergehenden Ansprüche, dadurch gekennzeichnet, daß die Gesamtheit der Lamellenmodule durch unter der Lamelle angeordneten Verteilerplatten (6) in gleiche Sektoren unterteilt sind, die als Dekantiereinheiten (7) fungieren, wobei jeder Sektor oder jede Dekantiereinheit (7) die gleiche festgelegte Anzahl von Zonen zum Abführen der behandelten Flüssigkeit besitzt.

5. Mit Lamellen ausgestattete Dekantiervorrichtung nach einem der vorhergehenden Ansprüche, dadurch gekennzeichnet, daß die Lamellenmodule auf einer Seite oder auf beiden Seiten eines Zuführungskanals (3) für die zu behandelnde Flüssigkeit, die in seinem oberen Bereich eingespeist wird, angeordnet und von diesem Kanal durch eine Längstrennwand (8) abgetrennt sind.

6. Mit Lamellen ausgestattete Dekantiervorrichtung nach Anspruch 5, dadurch gekennzeichnet, daß der Kanal (3) an dem dem Wasserzutritt gegenüberliegenden Ende ein einstellbares Wehr (4) besitzt.

7. Mit Lamellen ausgestattete Dekantiervorrichtung nach Anspruch 5, dadurch gekennzeichnet, daß die Abtrennplatten (6) in den unteren Bereich der Vorrichtung herabragen, und zwar um einen Betrag, der größer ist, als derjenige, den jede Trennwand (8) herabragt, jedoch ohne den Boden der Vorrichtung notwendigerweise zu erreichen.

8. Vorrichtung nach einem der Ansprüche 1 bis 4, dadurch gekennzeichnet, daß die Lamellenmodule durch einen Frontkanal (3a) versorgt werden, wobei zwischen dem Kanal und den Modulen eine transversale Trennwand (8a) quer angeordnet ist, die auf ein Niveau herabragt, das niedriger ist als das der Platten (6).

Fig.1

EP 0 245 140 B1

Fig. 2

2